# EUROPEAN PATENT SPECIFICATION

(11) **EP 4 425 860 B1**
(45) Date of publication and mention of the grant of the patent: **08.07.2026**
(21) Application number: 22962281.6
(22) Date of filing: 17.10.2022
(51) Int. Cl.: H04L 45/748, H04L 45/00, H04L 45/74, H04L 27/00, H04L 45/745, H04L 9/40

(54) **PACKET PROCESSING METHOD AND APPARATUS**
PAKETVERARBEITUNGSVERFAHREN UND -VORRICHTUNG
PROCÉDÉ ET APPAREIL DE TRAITEMENT DE PAQUET

(43) Date of publication of application: 04.09.2024
(73) Proprietor: New H3C Technologies Co., Ltd., Hangzhou, Zhejiang 310052 (CN); Tsinghua University, Beijing 100084 (CN)
(72) Inventor: WU, Bin, Beijing 100102 (CN); LI, Dan, Beijing 100084 (CN); QIN, Lancheng, Beijing 100084 (CN)
(74) Representative: Zimmermann & Partner Patentanwälte mbB
(86) International application number: PCT/CN2022/125569
(87) International publication number: WO 2024/082081

(56) References cited:
- CN-A- 106 911 724
- CN-A- 109 257 279
- CN-A- 111 416 887
- CN-A- 112 910 792
- US-A1- 2004 215 609
- US-A1- 2014 006 706
- US-A1- 2019 236 103
- US-A1- 2021 392 167
- LIN Y QIU NEW H3C TECHNOLOGIES C: "Intra-domain SAVNET method draft-lin-savnet-lsr-intra-domain-method-00 ;draft-lin-savnet-lsr-intra-domain-method-00.txt", 10 July 2022 (2022-07-10), pages 1 - 18, XP015152828, Retrieved from the Internet <URL:https://tools.ietf.org/html/draft-lin-savnet-lsr-intra-domain-method-00> [retrieved on 20220710]

## Description

### TECHNICAL FIELD

The present disclosure relates to the technical field of communication, in particular to a packet processing method and apparatus.

### BACKGROUND

SAVNET (Source Address Validation in Intra-domain and Inter-domain networks) is a technology to prevent network attacks of forging IPv6 (Internet Protocol version 6) source addresses. At present, when a network device adopts the SAVNET technology to process a packet, a result field of a SAV (Source Address Validation) entry can only store a limited number of indexes of input interfaces as limited by a length of the result field of the SAV entry of a data plane, and thus the SAV corresponding to the limited number of input interfaces can be finished, resulting in a decrease of accuracy of packet processing.

US20190236103A1 provides an algorithmic TCAM based ternary lookup method. The method stores entries for ternary lookup into several sub-tables. All entries in each sub-table have a sub-table key that includes the same common portion of the entry. No two sub-tables are associated with the same sub-table key. The method stores the keys in a sub-table keys table in TCAM. Each key has a different priority. The method stores the entries for each sub-table in random access memory. Each entry in a sub-table has a different priority. The method receives a search request to perform a ternary lookup for an input data item. A ternary lookup into the ternary sub-table key table stored in TCAM is performed to retrieve a sub-table index. The method performs a ternary lookup across the entries of the sub-table associated with the retrieved index to identify the highest priority matched entry for the input data item.

US20210392167A1 provides a method for processing network communications, including receiving a network packet at a network device and performing at least one lookup for the packet in one or more first lookup tables in which the one or more first lookup tables are programmed to include at least one of an exact match or longest prefix match (LPM) table entry. The method includes obtaining a security source segment and a security destination segment based upon the result of the at least one lookup for the packet in the one or more first lookup tables. The method further includes performing a lookup in a second lookup table based upon the security source segment and security destination segment in which the second lookup table is programmed in a content addressable memory. Based upon the result of the lookup in the second lookup table, processing a forwarding decision for the packet according to the security source segment and security destination segment.

LIN Y QIU NEW H3C TECHNOLOGIES C: "Intra-domain SAVNET method draft-lin-savnet-lsr-intra-domain-method-00.txt", 10 July 2022 (2022-07-10), pages 1-18, XP015152828, proposes a method of Source Address Validation in Intra-domain, which can be applied to OSPF and IS-IS protocols. By extending IGP and adding the protocol calculation procedure, the SAV information can be accurately calculated to realize the source address verification.

### SUMMARY

Objects of examples of the disclosure are to provide a packet processing method and apparatus, so as to solve a problem that the accuracy of packet processing is low due to a limitation of a length of a result field of a SAV entry of a data plane.

The invention is set out in the appended set of claims.

In a technical solution provided by an example of the disclosure, after receiving the packet, the network device matches the index of the input interface for receiving the packet and the source address of the packet with the key field of the SAV entry of the data plane, and permits the packet when the target SAV entry with a matched key field is obtained. It can be seen that in the technical solution provided by an example of the disclosure, when the network device processes the packet, it is not limited by save of the length of the result field of the SAV entry, and SAVs corresponding to all input interfaces can be completed, thus improving the accuracy of packet processing.

### BRIEF DESCRIPTION OF THE DRAWINGS

In order to more clearly describe the technical solutions of the examples of the present disclosure and the prior art, accompanying drawings that need to be used in examples and the prior art will be briefly described below.
Fig. 1 is a schematic diagram of a network architecture for deploying SAVNET;
Fig. 2 is a schematic diagram of a structure of a SAV entry of a control plane;
Fig. 3 is a schematic diagram of a structure of a SAV entry of a data plane;
Fig. 4 is a schematic flowchart of a packet processing method in the prior art;
Fig. 5 is a first schematic flowchart of a packet processing method provided by an example of the disclosure;
Fig. 6 is a schematic diagram of a structure of a SAV entry of a data plane provided by an example of the disclosure;
Fig. 7 is a second schematic flowchart of a packet processing method provided by an example of the disclosure;
Fig. 8 is a schematic diagram of a structure of a forwarding entry of a data plane provided by an example of the disclosure;
Fig. 9 is a schematic flowchart of a SAV entry construction method provided by an example of the disclosure;
Fig. 10 is a schematic diagram of a structure of a SAV entry of a control plane provided by an example of the disclosure;
Fig. 11 is a third schematic flowchart of a packet processing method provided by an example of the disclosure;
Fig. 12 is a first schematic structure diagram of a packet processing apparatus provided by an example of the disclosure;
Fig. 13 is a second schematic structure diagram of a packet processing apparatus provided by an example of the disclosure; and
Fig. 14 is a schematic structure diagram of a SAV entry construction apparatus provided by an example of the disclosure.

### DETAILED DESCRIPTION

In order to make the objective, technical solutions and advantages of the present disclosure clearer and more understandable, the present disclosure will be described in more detail below with reference to the accompanying drawings and examples. Obviously, the described examples are only some, and not all, of the examples of the present disclosure.

For the convenience of understanding, terms appearing in examples of the disclosure are explained below.

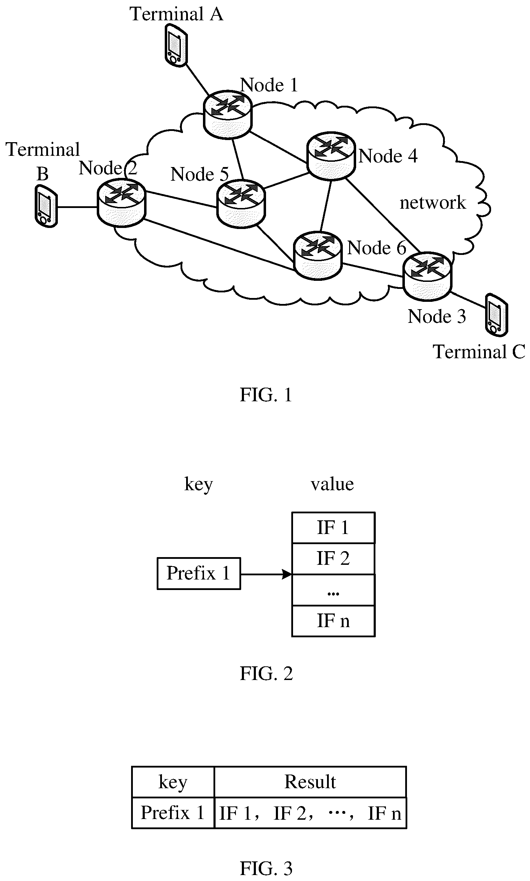

CM (Complete Mode): all network devices in a network are deployed with SAVNET. The network devices can be devices with communication functions such as routers, switches, firewalls and the like. A network architecture is shown in Fig. 1. A network shown in Fig.1 includes nodes 1-6. If all nodes 1-6 are deployed with SAVNET, a deployment mode for the network is CM.

IM (Incomplete Mode): some of network devices in a network are deployed with SAVNET. A network architecture is shown in Fig. 1. A network shown in Fig.1 includes nodes 1-6. If some of nodes 1-6 are deployed with SAVNET, such as nodes 2-6 are deployed with SAVNET and node 1 is not deployed with SAVNET, the deployment mode for the network is IM.

SAVNET is a technology to prevent network attacks of forging IPv6 source addresses, which adopts a source address verification scheme based on routing information. The basic principle of SAVNET is to establish a mapping relationship between a source address and an input interface of a network device, and to filter a received packet by checking whether the input interface of the received packet belongs to a legal input interface corresponding to the source address of the packet.

The network devices deployed with SAVNET can adopt BGP (Border Gateway Protocol) extension, IGP (Interior Gateway Protocol) extension or other private protocols or the like in a control plane, and learn the mapping relationship between the source address and the input interface of the network device through a SPA (Source Prefix Advertising) message and a DPP (Destination Prefix Probing) message. A specific processing flow of the control plane is as follows:
1) An edge node collects a legal user network segment hanging under a user side interface of this edge node through information such as routing or the like, as a legal source address prefix of this edge node. In the network architecture shown in Fig. 1, nodes 1-3 are edge nodes. Node 1 collects information such as protocols of direct routing, static routing, IGP routing or the like with an interface connected to a legal terminal A on the user side as an output interface, so as to obtain the legal user network segment hanging under the user side interface for node 1 as the legal source address prefix of node 1; node 2 collects information such as protocols of direct routing, static routing, IGP routing or the like with an interface connected to a legal terminal B on the user side as an output interface, so as to obtain the legal user network segment hanging under the user side interface for node 2 as the legal source address prefix of node 2; node 3 collects information such as protocols of direct routing, static routing, IGP routing or the like with an interface connected to a legal terminal C on the user side as output interface, so as to obtain the legal user network segment hanging under the user side interface for node 3 as the legal source address prefix of node 3.
2) The edge node carries the legal source address prefix of this edge node in a SPA message, and advertises the SPA message to a neighbor node connected to a network side interface of this edge node; the neighbor node learns the legal source address prefix of the edge node, and continues to advertise the SPA message to another node, so that another node learns the legal source address prefix of the edge node. Finally, all nodes in the network learn the legal source address prefixes of all edge nodes.

Taking node 1 in Fig. 1 as an example, node 1 sends a SPA message to neighbor node 4, and neighbor node 4 learns the legal source address prefix of node 1 through the SPA message; after that, neighbor node 4 sends the SPA message to node 6, and node 6 learns the legal source address prefix of node 1 through the SPA message.

In this way, nodes 1-6 learn the legal source address prefixes of nodes 1-3.

3) The edge node probes a legal path of traffic through a DPP message. Specifically, the edge node traverses network side interfaces, selects a network side interface connected with the neighbor node, acquires all Forwarding Information Base (FIB) prefixes with this interface as the output interface and encapsulates the same into the DPP message as a reachable destination address prefix list, and sends the DPP message from this interface; after receiving the DPP message from the edge node, the neighbor node establishes the mapping relationship between a legal source prefix of this edge node and an input interface for receiving the DPP message based on the pre-learned the legal source prefix of the edge node and the input interface for receiving the DPP message; at the same time, the neighbor node splits the reachable destination address prefix list in the DPP message according to the output interface of this node to form one or more DPP messages, and the probe is continued. Finally, all nodes in the network learn the mapping relationship between the legal source prefix and the input interface. The FIB prefix is an address prefix included in the key (key field) of the FIB entry.

Through the above-mentioned protocol interaction of 1) - 3), each node learns a series of SAV entries of the control plane. A structure of a SAV entry of the control plane is shown in Fig. 2. In Fig. 2, key represents a key field, and value represents a value field. The key includes a legal source address prefix, such as Prefix 1 in Fig. 2, and the value includes one or more legal indexes of input interfaces, such as IF 1-IF n in Fig. 2.

Based on the structure of a SAV entry of the control plane, the network device generates a SAV entry of a data plane, as shown in Fig. 3, in which key represents a key field, and Result represents a result field. The key includes the legal source address prefix, such as Prefix 1 in Fig. 3, and the Result includes one or more legal indexes of input interfaces, such as IF 1-IF n in Fig. 3.

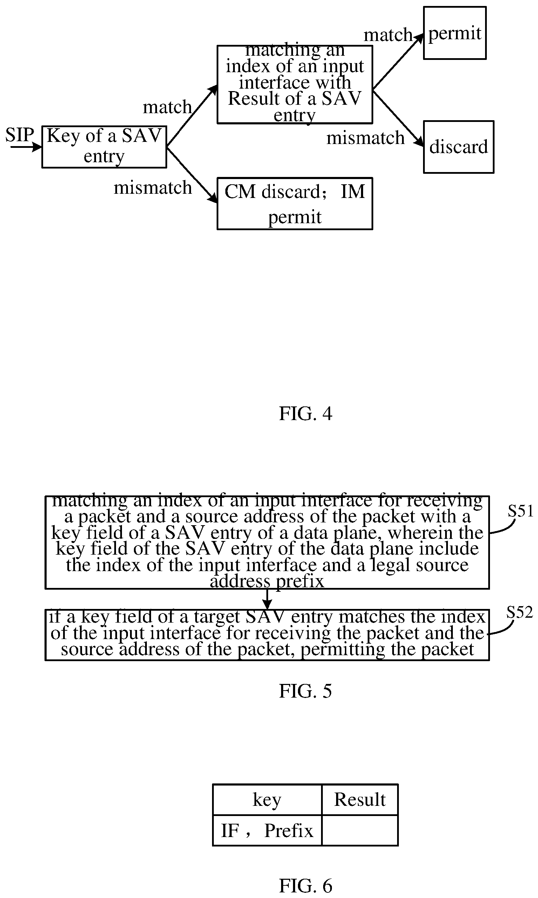

Based on the SAV entry of the data plane shown in Fig. 3, the network device filters the packet. A specific packet processing flow is shown in Fig. 4.

The network device extracts a SIP (Source Internet Protocol) address of the received packet, and matches the SIP with the key of the SAV entry of the data plane. If the SIP matches the key, that is, the SIP is in a network segment indicated by the key of the SAV entry, an index of an input interface of the network device for receiving the packet is matched with the Result of the SAV entry of the data plane. If the index of the input interface matches the Result, that is, the index of the input interface of the network device for receiving the packet is included in the Result of the SAV entry, it means that the input interface for the network device receiving the packet is a legal input interface of the legal source address prefix in the key, and the packet is permitted. If the index of the input interface does not match the Result, that is, the index of the input interface of the network device for receiving the packet is not included in the Result of the SAV entry, it means that the input interface for the network device receiving the packet is not a legal input interface of the legal source address prefix in the key, and the packet is discarded.

If the SIP does not match the key, and the deployment mode for the network is CM, it means that the SIP does not belong to the legal source address prefix, and the packet is discarded. If the SIP does not match the key, and the deployment mode for the network is IM, the SIP may belong to the legal source address prefix, but the network device has not yet learned the legal source address prefix corresponding to the SIP, so the packet is permitted to avoid discarding the legal packet by mistake.

The implementation of the above packet processing method is based on the SAV entry of the data plane. However, the length of the result field of the SAV entry is limited, and the number of indexes of input interfaces that can be stored is limited, for example, 8 indexes of input interfaces can be stored. In this case, once the number of indexes of input interfaces of a legal source address prefix is large, some of the indexes of input interfaces cannot be written into the result field of the SAV entry. Therefore, the network device cannot filter the packet accurately, resulting in a low accuracy of packet processing.

To solve above problems, an example of the disclosure provides a packet processing method, which can be applied to any network device in a network, such as any of nodes 1-6 shown in Fig. 1. After receiving a packet, the network device matches the index of the input interface for receiving packet and the source address of the packet with the key field of the SAV entry of the data plane, and permits the packet when a target SAV entry matching the key field is obtained. It can be seen that in the technical solution provided by the example of the disclosure, when the network device processes the packet, it is not limited by save of the length of the result field of the SAV entry, and SAVs corresponding to all input interfaces can be finished, thus improving the accuracy of packet processing.

The packet processing method provided by an example of the disclosure will be explained in detail through following specific examples.

As shown in Fig. 5, an example of the disclosure provides a packet processing method, which is applied to a network device, including:
Block S51: matching an index of an input interface for receiving a packet and a source address of the packet with a key field of a SAV entry of a data plane, wherein the key field of the SAV entry of the data plane includes an index of an input interface and a legal source address prefix;
Block S52: if a key field of a target SAV entry matches the index of the input interface for receiving the packet and the source address of the packet, permitting the packet.

In a technical solution provided by the example of the disclosure, after receiving the packet, the network device matches the index of the input interface for receiving the packet and the source address of the packet with the key field of the SAV entry of the data plane, and permits the packet when the target SAV entry matching the key field is obtained. It can be seen that in the technical solution provided by the example of the disclosure, when the network device processes the packet, it is not limited by save of the length of the result field of the SAV entry, and SAVs corresponding to all input interfaces can be finished, thus improving the accuracy of packet processing.

The packet processing method provided by the example of the disclosure can be implemented by a CPU (Central Processing Unit) of the network device. In order to improve packet processing efficiency, the packet processing method provided by the example of the disclosure can also be implemented by a forwarding chip of the network device.

The network device may include one or more forwarding chips. When the packet processing method is implemented by forwarding chips of the network device, each of the forwarding chips stores the SAV entry of the data plane.

In an example, all SAV entries of the data plane can be stored in each of the forwarding chips, so that the forwarding chips can perform more comprehensive and accurate packet processing.

In another example, each of the forwarding chips stores the SAV entry of the data plane corresponding to an interface on this forwarding chip. That is, each of the forwarding chip stores the SAV entry of the data plane, the key field of which includes an index of the interface on this forwarding chip. This can greatly save entry resources in the forwarding chip.

For example, the key field of SAV entry 1 includes {interface 1, address prefix 1}, and the key field of SAV entry 2 include {interface 2, address prefix 1}. The forwarding chip 1 includes the interface 1, and the forwarding chip 2 includes the interface 2. At this time, the SAV entry 1 is stored in the forwarding chip 1, and the SAV entry 2 is stored in the forwarding chip 2.

Compared with the prior art as shown in the structure of the SAV entry of the data plane in Fig. 3, in which SAV entries stored in the forwarding chip 1 and the forwarding chip 2 both need to include the interface 1 and the interface 2, in the example of the disclosure, the number of indexes of input interfaces stored in one forwarding chip is reduced, thus saving entry resources.

In some examples, a TCAM (Ternary Content Addressable Memory) may also be configured in the network device, and the SAV entry of the data plane is stored in the TCAM. The network device completes the matching of the source address and the index of the input interface with the key field of the SAV entry of the data plane by using the TCAM, which can greatly improve the matching efficiency and further improve the packet processing efficiency.

In an example of the disclosure, when the packet processing method is implemented by the forwarding chip of the network device, the TCAM is configured in or connected with the forwarding chip. There is no limitation on this.

In an example of the disclosure, other types of search engines other than the TCAM can also be configured in the network device, as long as they can communicate with the forwarding chip to complete the matching and searching for the SAV entry.

In the above block S51, the SAV entry of the data plane includes the key field and the result field. In an example of the disclosure, in the SAV entry of the data plane, the key field includes two kinds of information, namely the index of the input interface and the legal source address prefix. The result field can be filled with default information or no information, that is, the result field is empty. At this time, a structure of the SAV entry of the data plane can be shown in Fig. 6. In Fig. 6, key represents the key field, Result represents the result field, IF represents the index of the input interface, and Prefix represents the legal source address prefix.

In an example of the disclosure, when the result field of the SAV entry is empty, the SAV entry resources can be saved to the greatest extent. The above default information can be set according to actual requirements. For example, the default information can be information indicating that the packet is forwarded after adding a legal identifier to the packet, information indicating that the packet is forwarded after deep packet detection of the packet, information indicating that the packet is forwarded after encryption of the packet, or the like.

The network device can fill the key field of the SAV entry of the data plane with the legal source address prefix and the index of the input interface in an order of the legal source address prefix and then the index of the input interface.

The network device can also fill the key field of the SAV entry of the data plane with the index of the input interface and the legal source address prefix in an order of the index of the input interface and then the legal source address prefix. At this time, effective information in the key field is located at a front end of the key field, which is convenient for the network device to process the key field and save storage resources.

After receiving the packet, the network device extracts the source address of the packet and determines the index of the input interface of the network device for receiving the packet. The network device can combine the source address of the packet with the index of the input interface for receiving the packet according to the order of the index of the input interface and then the legal source address prefix in the key field of the SAV entry of the data plane, and match the combined information with the key field of the SAV entry of the data plane.

In an example of the disclosure, the network device can complete matching of the combined information with the key field of the SAV entry of the data plane in a way of LPM (Longest Prefix Match), and obtain a target SAV entry with a key field matching the combined information. The network device can also complete matching of the combined information with the key field of the SAV entry of the data plane in other ways, which is not limited.

In an example of the disclosure, the network device matches the combined information with the key field of the SAV entry of the data plane. If the index of the input interface in the combined information is the same as that in the key field of the SAV entry, and the source address in the combined information has the legal source address prefix in the key field of the SAV entry, it means that the combined information matches the key field of the SAV entry of the data plane. Otherwise, the combined information does not match the key field of the SAV entry in the data plan.

When the combined information matches the key field of the SAV entry of the data plane, which indicates that the source address of the received packet belongs to the legal source address prefix of the input interface for receiving the packet, the network device executes the above block S52 to permit the packet, such as forward the packet to a destination terminal according to a destination address of the packet.

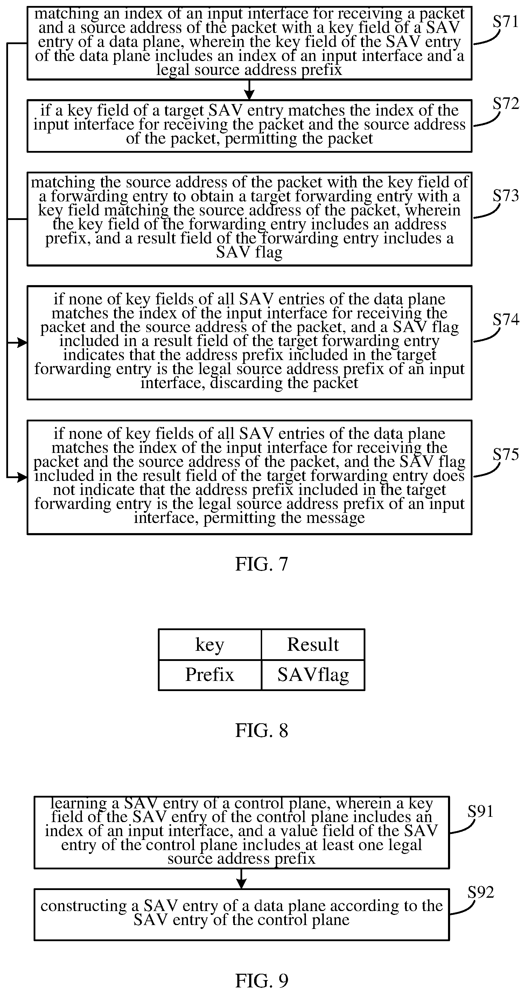

In some examples, it is also provided a packet processing method, as shown in Fig. 7, including:
Block S71: matching an index of an input interface for receiving a packet and a source address of the packet with a key field of a SAV entry of a data plane, wherein the key field of the SAV entry of the data plane includes an index of an input interface and a legal source address prefix;
Block S72: if a key field of a target SAV entry matches the index of the input interface for receiving the packet and the source address of the packet, permitting the packet;
Block S73: matching the source address of the packet with the key field of a forwarding entry to obtain a target forwarding entry with a key field matching the source address of the packet, wherein the key field of the forwarding entry includes an address prefix, and a result field of the forwarding entry includes a SAV flag;
Block S74: if none of key fields of all SAV entries of the data plane matches the index of the input interface for receiving the packet and the source address of the packet, and a SAV flag included in a result field of the target forwarding entry indicates that the address prefix included in the target forwarding entry is the legal source address prefix of an input interface, discarding the packet;
Block S75: if none of key fields of all SAV entries of the data plane matches the index of the input interface for receiving the packet and the source address of the packet, and the SAV flag included in the result field of the target forwarding entry does not indicate that the address prefix included in the target forwarding entry is the legal source address prefix of an input interface, permitting the packet.

In a technical solution provided by an example of the disclosure, when none of the key fields of all SAV entries of the data plane matches the index of the input interface for receiving the packet and the source address of the packet, it can accurately determine whether the source address of the packet belongs to the legal source address prefix of other input interfaces by combining the forwarding entry, thus improving the accuracy of packet processing.

The packet processing method provided by the example of the disclosure can be implemented by a CPU of the network device. In order to improve packet processing efficiency, the packet processing method provided by the example of the disclosure can also be implemented by a forwarding chip of the network device.

The network device may include one or more forwarding chips. When the packet processing method is implemented by forwarding chips of the network device, each of the forwarding chips stores the forwarding entry learned by the network device.

In some examples, a TCAM may also be configured in the network device, and forwarding entry of the data plane are stored in the TCAM. The network device completes the matching of the source address with the key field of the forwarding entry of the data plane by using the TCAM, which can greatly improve the matching efficiency and further improve the packet processing efficiency.

In an example of the disclosure, when the packet processing method is implemented by the forwarding chip of the network device, the TCAM is configured in or connected with the forwarding chip. There is no limitation on this.

In an example of the disclosure, other types of search engines other than the TCAM can also be configured in the network device, as long as they can communicate with the forwarding chip to complete the matching and searching of the forwarding entry.

The above blocks S71-S72 are the same as the above blocks S51-S52, and will not be described here.

An example does not limit an execution sequence of block S71 and block S73.

In the above block S73, the network device can learn one or more forwarding entries. In the data plane, the forwarding entry includes the key field and the result field, where the key field includes the address prefix and the result field includes the SAV flag. At this time, a structure of the forwarding entry can be shown in Fig. 8. In Fig.8, key represents the key field, Result represents the result field, Prefix represents the address prefix, and SAVflag represents the SAV flag.

The SAV flag indicates that the address prefix included in this forwarding entry is the legal source address prefix of an input interface, or the SAV flag does not indicate that the address prefix included in this forwarding entry is the legal source address prefix of an input interface.

In some examples, a bit width of the SAV flag may be 1 bit. For example, the SAV flag can take a value of 0 or 1. When the SAV flag is 1, the SAV flag indicates that the address prefix included in this forwarding entry is the legal address prefix of an input interface. When the SAV flag is 0, the SAV flag does not indicate that the address prefix included in this forwarding entry is the legal address prefix of an input interface. In an example of the disclosure, 1 bit can be added to the result field of the forwarding entry as a location of the SAV flag, and a reserved bit of the result field of the forwarding entry can also be used as the location of the SAV flag, without adding new entry resources, which saves entry resources while ensuring the accuracy of packet processing.

In an example of the disclosure, the bit width of the SAV flag may be 2, 3, 4 bits or the like, which is not limited.

In an example of the disclosure, the result field of the forwarding entry may include other information other than the SAV flag, such as an index output interface, an index of next hop or the like, which is not limited.

In an example of the disclosure, if the source address of the packet has the address prefix in the key field of the forwarding entry, it means that the source address of the packet matches the key field of the forwarding entry, and the matched forwarding entry is the target forwarding entry; otherwise, it mean that the source address of the packet does not match the key field of the forwarding entry.

When none of key fields of all SAV entries of the data plane matches the index of the input interface for receiving the packet and the source address of the packet, if the network device detects that the SAV flag in the target forwarding entry indicates that the address prefix included in the target forwarding entry is the legal source address prefix of an input interface, for example, SAV flag is 1, it means that the address prefix included in the target forwarding entry is the legal source address prefix of an input interface, but not the legal source address prefix of the input interface for receiving packet, and block S74 is executed to discard the packet to improve the security of the network.

When none of key fields of all SAV entries of the data plane matches the index of the input interface for receiving the packet and the source address of the packet, if the network device detects that the SAV flag in the target forwarding entry does not indicate that the address prefix included in the target forwarding entry is the legal source address prefix of an input interface, for example, SAV flag is 0, the SIP may belong to the legal source address prefix, but the network device has not yet learned the legal source address prefix corresponding to the SIP, and block S75 is executed to permit the packet, so as to avoid discarding a legal packet by mistake.

In an example of the disclosure, the network device can support a parallel search of the SAV entry and forwarding entry of the data plane. For example, by using the TCAM to support the parallel search of multiple entries, the above blocks S71 and S73 are executed in parallel, so as to improve the matching efficiency and the packet processing efficiency.

If the network device does not support the parallel search of the SAV entry and forwarding entry of the data plane, the network device can determine a deployment mode of SAVNET for a network to which the network device belongs in order to improve the packet processing efficiency.

If the determined deployment mode is Complete Mode, it means that the network device should have learned all legal source address prefixes. At this time, it is not necessary to perform the above block S73 to search the forwarding entry. When none of key fields of all SAV entries of the data plane matches the index of the input interface for receiving the packet and the source address of the packet, it means that the packet is illegal, and the network device discards the packet.

If the determined deployment mode is an Incomplete Mode, the network device may perform the above block S73 to search the forwarding entry, and then perform blocks S74-S75.

In an example of the disclosure, in the Complete Mode, the network device can determine that the packet is illegal as long as none of key fields of all SAV entries of the data plane matches the index of the input interface for receiving packet and the source address of the packet, and then discard the packet. Here, it is unnecessary to search the forwarding entry, which reduces the time for searching the forwarding entry and improves the packet processing efficiency.

In some examples, at the above block S73, the network device searches the forwarding entry in a LPM mode to obtain the target forwarding entry. Specifically, the network device matches the source address of the received packet with address prefixes included in the key fields of the forwarding entries to obtain at least one candidate entry with an address prefix matching the source address of the packet; and determines a candidate entry to which a longest address prefix belongs from at least one candidate entry as the target forwarding entry with a key field matching the source address of the packet.

For example, the source address of the received packet is 1.1.1.1, the address prefix included in the key field of forwarding entry 1 is 1.1.0.0/16, and address prefix included in the key field of forwarding entry 2 is 1.1.1.0/24. The network device matches the source address of the received packet with the address prefix included in the key field of the forwarding entry, and the obtained candidate entries are the forwarding entry 1 and forwarding entry 2. The length of 1.1.0.0/16 is less than the length of 1.1.1.0/24. Therefore, the network device determines that the candidate entry to which the longest address prefix belongs is the forwarding entry 2 to which 1.1.1.0/24 belongs among the forwarding entry 1 and forwarding entry 2. That is, the forwarding entry 2 is the target forwarding entry with a key field matching the source address of the packet.

In an example of the disclosure, the network device can also search the forwarding entry in other ways to obtain the target forwarding entry. For example, the network device matches the source address of the received packet with the address prefix included in the key field of the forwarding entry to obtain at least one candidate entry with an address prefix matching the source address of the packet; and takes the at least one candidate entry as target forwarding entry. At this time, as long as the SAV flag included in the result field of one of the target forwarding entry indicates that the address prefix included in the target forwarding entry is the legal source address prefix of an input interface, the network device discards the packet to avoid forwarding the packet by mistake. If none of the SAV flags included in the result fields of all target forwarding entries indicates that the address prefix included in the target forwarding entry is the legal source address prefix of an input interface, the network device permits the packet.

In some examples, to facilitate issuing to each forwarding chip the SAV entry including the index of interface on this forwarding chip, an example of the disclosure provides a method for constructing a SAV entry, as shown in Fig. 9. The method can include:
Block S91: learning a SAV entry of a control plane, wherein a key field of the SAV entry of the control plane includes an index of an input interface, and a value field of the SAV entry of the control plane includes at least one legal source address prefix.

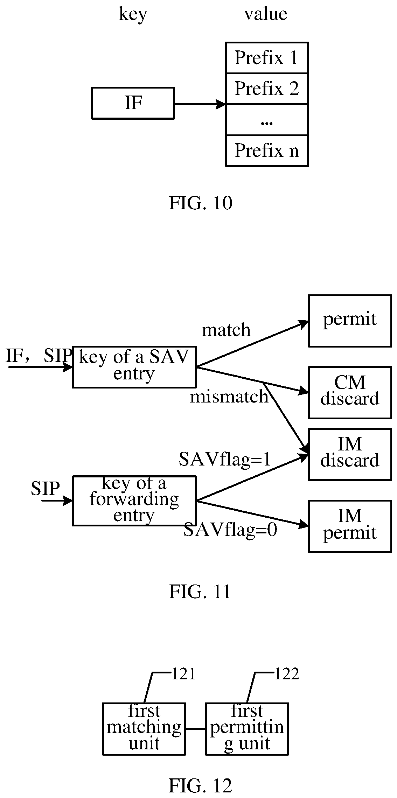

In an example of the disclosure, the SAV entry of the control plane includes the key field and the value field, wherein the key field includes the index of the input interface, and the value field includes one or more legal source address prefixes. The specific structure of the SAV entry of the control plane can be seen in Fig. 10. In Fig. 10, key represents the key field, value represents the value field, IF represents the index of the input interface, and Prefix 1-Prefix n represent the legal source address prefixes.

The network device can learn a mapping relationship between source addresses and the input interfaces of the network device through a SPA message and a DPP message, and construct the SAV entry of the control plane. For the specific process of constructing the SAV entry of the control plane, please refer to the above related description, which is not repeated here.

Block S92: constructing a SAV entry of a data plane according to the SAV entry of the control plane.

After acquiring the SAV entry of the control plane, the network device uses {index of input interface, source address prefix} as the key to convert the SAV entry of the control plane into the SAV entry of the data plane. The converted SAV entry of the data plane can be seen in Fig. 6.

In ta technical solution provided by an example of the disclosure, the network device changes the structure of the SAV entry of the control plane, and takes the index of the input interface as the key, so that the network device can more quickly determine which key fields of SAV entries of the data plane the index of interface on the forwarding chip exists in, and then quickly issue the SAV entry of the data plane to the corresponding forwarding chip.

In an example of the disclosure, the network device may also adopt the structure of the SAV entry of the control plane in the prior art, as shown in Fig. 2, which is not limited.

The packet processing method provided by an example of the disclosure will be described in detail with reference to the packet processing flow shown in Fig. 11. SAVflag represents SAV flag. If the Savflag is 1, it indicates that the address prefix included in this forwarding entry is the legal source address prefix of an input interface; if the SAVflag is 0, it does not indicate that the address prefix included in this forwarding entry is the legal source address prefix of an input interface.

The network device extracts a SIP address of the received packet and the index of the input interface IF for receiving the packet, and performs the following two matching operations of: matching the SIP and IF with the key of the SAV entry of the data plane, and matching the SIP with the key of the forwarding entry of the data plane. The above two matching operations can be performed in parallel or in series. For example, matching the SIP and IF with the key of the SAV entry of the data plane is performed first, and then matching the SIP with the key of the forwarding entry of the data plane is performed. For another example, matching the SIP and IF with the key of the SAV entry of the data plane is performed first, and then when the SIP and IF do not match with the key of the SAV entry of the data plane and in a IM scene, matching the SIP with the key of the forwarding entry of the data plane is performed. The specific execution sequence can be set according to actual requirements.

If the SIP and the IF match the key of the SAV entry, that is, the SIP is in a network segment indicated by the key of the SAV entry, and the IF is the same as the index of the input interface included in the key of the SAV entry, it means that the source address of the packet belongs to the legal source address prefix of the input interface of the network device for receiving the packet, and the packet is permitted.

If the SIP and IF do not match the key of the SAV entry, and a current deployment mode is CM, it means that the packet is illegal, and the packet is discarded, so as to improve the network security.

If the SIP and IF do not match the key of the SAV entry, the current deployment mode is IM, and SAVflag in the result field of the target forwarding entry that matches the SIP is 1, it means that the source address of the packet does not belong to the legal source address prefix of the input interface of the network device for receiving the packet, but belongs to legal source address prefixes of other input interfaces, and the packet is discarded, so as to improve the network security.

If the SIP and IF do not match the key of the SAV entry, the current deployment mode is IM, and SAVflag in the result field of the target forwarding entry that matches the SIP is 0, it means that the SIP may be a legal source address prefix, but the network device has not yet learned the legal source address prefix corresponding to the SIP, and the packet is permitted, so as to avoid discarding the legal packet by mistake.

According to a technical solution provided by an example of the disclosure, the number of legal input interfaces is no longer limited by the length of the result field, and the accuracy of packet processing is improved. In addition, each forwarding chip can only store the SAV entry corresponding to an interface on the forwarding chip, which reduces the number of indexes of input interfaces stored on each forwarding chip, and correspondingly saves the number of SAV entries of the stored indexes of input interfaces, thus saving the entry resources.

In addition, a technical solution provided by an example of the disclosure, when SAV processing is completed by combining the forwarding entry, only one-bit storage space of SAVflag needs to be added in the forwarding entry, and even a reserved bit of the forwarding entry can be used to realize SAVflag, which further saves the entry resources while completing the SAV processing.

Corresponding to the above packet processing method, the example of the disclosure also provides a packet processing apparatus, as shown in Fig. 12, which is applied to a network device. The apparatus is not a part of the present invention and includes:
a first matching unit 121 to match an index of an input interface for receiving a packet and a source address of the packet with a key field of a SAV entry of a data plane, wherein the key field of the SAV entry of the data plane includes an index of an input interface and a legal source address prefix;
a first permitting unit 122 to permit the packet if a key field of a target SAV entry matches the index of the input interface for receiving the packet and the source address of the packet.

In a technical solution provided by an example of the disclosure, after receiving the packet, the network device matches the index of the input interface for receiving the packet and the source address of the packet with the key field of the SAV entry of the data plane, and permits the packet when the target SAV entry with a matched key field is obtained. It can be seen that in the technical solution provided by an example of the disclosure, when the network device processes the packet, it is not limited by save of the length of the result field of the SAV entry, and SAVs corresponding to all input interfaces can be completed, thus improving the accuracy of packet processing.

In some examples, the network device may include at least one forwarding chip; each forwarding chip stores a SAV entry of the data plane whose key field includes an index of the interface on the forwarding chip; and/or
the SAV entry of the data plane is stored in a TCAM.

In some examples, a result field of the SAV entry of the data plane is empty;
the index of the input interface and the legal source address prefix are filled in the key field of the SAV entry of the data plane in an order of the index of the input interface and then the legal source address prefix; or the legal source address prefix and the index of the input interface are filled in the key field of the SAV entry in an order of the legal source address prefix and then the index of the input interface.

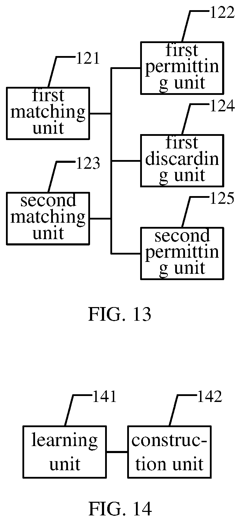

In some examples, as shown in Fig. 13, the above packet processing apparatus may further include:
a second matching unit 123 to match the source address of the packet with a key field of a forwarding entry to obtain a target forwarding entry with a key field matching the source address of the packet, wherein the key field of the forwarding entry includes an address prefix, and a result field of the forwarding entry includes a SAV flag;
a first discarding unit 124 to discard the packet if none of key fields of all SAV entries of the data plane matches the index of the input interface for receiving the packet and the source address of the packet, and a SAV flag included in a result field of the target forwarding entry indicates that an address prefix included in the target forwarding entry is a legal source address prefix of an input interface;
a second permitting unit 125 to permit the packet if none of key fields of all SAV entries of the data plane matches the index of the input interface for receiving the packet and the source address of the packet, and the SAV flag included in the result field of the target forwarding entry does not indicate that the address prefix included in the target forwarding entry is a legal source address prefix of an input interface.

In some examples, the above packet processing apparatus may further include:
a determination unit to determine a deployment mode of Source Address Validation in Intra-domain and Inter-domain Networks SAVNET for a network to which the network device belongs;
a second discarding unit to discard the packet if a determined deployment mode is a Complete Mode and none of key fields of all SAV entries of the data plane matches the index of the input interface for receiving the packet and the source address of the packet;
wherein the second matching unit 123 can include a first matching subunit;
the first matching subunit is to match the source address of the packet with the key field of the forwarding entry if the determined deployment mode is an Incomplete Mode, to obtain the target forwarding entry with a key field matching the source address of the packet.

In some examples, the second matching unit 123 can include a second matching subunit;
the second matching subunit is to match the source address of the packet with address prefixes included in the key fields of the forwarding entries to obtain at least one candidate entry with an address prefix matching the source address of the packet; determine a candidate entry to which a longest address prefix belongs from the at least one candidate entry as the target forwarding entry with a key field matching the source address of the packet.

In some examples, the network device may include at least one forwarding chip; the forwarding entry learned by the network device is stored in each forwarding chip; and/or
the forwarding entry is stored in a TCAM.

In some examples, a bit width of the SAV flag is 1 bit.

In some examples, as shown in Fig. 14, an apparatus for constructing a SAV entry is also provided, which may include:
a learning unit 141 to learn a SAV entry of a control plane, wherein a key field of the SAV entry of the control plane includes an index of an input interface, and a value field of the SAV entry of the control plane includes at least one legal source address prefix;
a construction unit 142 to construct a SAV entry of a data plane according to the SAV entry of the control plane.

In a technical solution provided by an example of the disclosure, the network device changes the structure of the SAV entry of the control plane, and takes the index of the input interface as the key, so that the network device can more quickly determine which key fields of SAV entries of the data plane the interface index on the forwarding chip exists in, and then quickly issue the SAV entry of the data plane to the corresponding forwarding chip.

Corresponding to the above packet processing method, an example of the disclosure also provides a forwarding chip to execute any of the above packet processing method blocks.

Corresponding to the above packet processing method, an example of the disclosure also provides a network device, including at least one forwarding chip, wherein the forwarding chip is to execute any of the above packet processing methods blocks.

In some examples, the network device may also include a processor to learn a SAV entry of a control plane, wherein a key field of the SAV entry of the control plane includes an index of an input interface, and a value field of the SAV entry of the control plane includes at least one legal source address prefix; and construct a SAV entry of the data plane according to the SAV entry of the control plane.

In an example of the disclosure, the SAV entry is constructed by the processor, and the forwarding chip is responsible for processing the packet based on the constructed SAV entry, which reduces a load of the forwarding chip and improves the packet processing efficiency.

The forwarding chip can be NP (Network Processor), Application Specific Integrated Circuit (ASIC), Field-Programmable Gate Array (FPGA), or other hardware processing chips such as programmable logic devices, Digital Signal Processor (DSP), discrete gate or transistor logic devices, discrete hardware components or the like, or a combination of multiple chips, which is not limited.

In the above examples, it may be implemented in whole or in part by software, hardware, firmware, or any combination thereof. When implemented in software, it may be implemented in whole or in part in the form of a computer program product. The computer program product includes one or more computer instructions. When the computer program instructions are loaded and executed on a computer, the processes or functions according to examples of the present disclosure are generated in whole or in part. The computer may be a general purpose computer, a special purpose computer, a computer network, or other programmable apparatus. The computer instructions may be stored in a computer readable storage medium or transmitted from one computer readable storage medium to another computer readable storage medium. For example, the computer instructions may be transmitted from a website, computer, server or data center to another website, computer, server or data center by wired (e.g., coaxial-cable, fiber, digital subscriber line (DSL)) or wirelessly (e.g., infrared, wireless, microwave, etc.) manner. The computer readable storage medium may be any available medium that can be accessed by a computer or may be a data storage device, such as a server, data center, or the like, including one or more integrated available mediums. The available mediums may be magnetic medium (e.g., floppy disk, hard disk, magnetic tape), optical medium (e.g., DVD), or semiconductor medium (e.g., solid state disk (SSD)), etc.

It should be noted that the relationship terms used herein, such as "first", "second" and the like are only to distinguish one entity or operation from another entity or operation, but do not necessarily require or imply that there is any actual relationship or order between these entities or operations. Moreover, the terms "include", "comprise", or any other variants thereof are intended to cover a non-exclusive inclusion, such that processes, methods, articles or devices, including a series of elements, include not only those elements that have been listed, but also other elements that are not specifically listed or the elements intrinsic to these processes, methods, articles or devices. Without further limitations, elements limited by the wording "include(s) a/an..." or "comprise(s) a/an..." do not exclude additional identical elements in the processes, methods, articles or devices, including the listed elements.

All of the examples in the description are described in a correlated manner, and identical or similar parts in various examples can refer to one another. In addition, the description for each example focuses on the differences from other examples. In particular, the examples of the apparatus, the forwarding chip and the network device are described briefly, since they are substantially similar to the example of the method, and the related contents can refer to the description of the example of the method.

The above examples are simply preferable examples of the present disclosure, and are not intended to limit the present disclosure.

## Claims

1. A packet processing method, which is implemented by a forwarding chip of a network device, comprising:
matching (S51, S71) an index of an input interface for receiving a packet and a source address of the packet with a key field of a Source Address Validation, SAV, entry of a data plane, wherein the key field of the SAV entry of the data plane comprises an index of an input interface and a legal source address prefix;
if a key field of a target SAV entry matches the index of the input interface for receiving the packet and the source address of the packet, permitting (S52, S72) the packet,
wherein the network device comprises at least one forwarding chip; each forwarding chip stores a SAV entry of the data plane whose key field comprises an index of an interface on the forwarding chip.

2. The method according to claim 1, wherein the SAV entry of the data plane is stored in a ternary content addressable memory, TCAM.

3. The method according to claim 1 or 2, wherein a result field of the SAV entry of the data plane is empty;
the index of the input interface and the legal source address prefix are filled in the key field of the SAV entry of the data plane in an order of the index of the input interface and then the legal source address prefix; or the legal source address prefix and the index of the input interface are filled in the key field of the SAV entry in an order of the legal source address prefix and then the index of the input interface.

4. The method according to claim 1, wherein the method further comprises:
matching (S73) the source address of the packet with a key field of a forwarding entry to obtain a target forwarding entry with a key field matching the source address of the packet, wherein the key field of the forwarding entry comprises an address prefix, and a result field of the forwarding entry comprises a SAV flag;
if none of key fields of all SAV entries of the data plane matches the index of the input interface for receiving the packet and the source address of the packet, and a SAV flag comprised in a result field of the target forwarding entry indicates that an address prefix comprised in the target forwarding entry is a legal source address prefix of an input interface, discarding (S74) the packet;
if none of key fields of all SAV entries of the data plane matches the index of the input interface for receiving the packet and the source address of the packet, and the SAV flag comprised in the result field of the target forwarding entry does not indicate that the address prefix comprised in the target forwarding entry is a legal source address prefix of an input interface, permitting (S75) the packet.

5. The method according to claim 1, wherein the method further comprises:
determining a deployment mode of Source Address Validation in Intra-domain and Inter-domain Networks, SAVNET, for a network to which the network device belongs;
if a determined deployment mode is a Complete Mode and none of key fields of all SAV entries of the data plane matches the index of the input interface for receiving the packet and the source address of the packet, discarding the packet;
if the determined deployment mode is an Incomplete Mode, matching the source address of the packet with a key field of a forwarding entry to obtain a target forwarding entry with a key field matching the source address of the packet, wherein the key field of the forwarding entry comprises an address prefix, and a result field of the forwarding entry comprises a SAV flag;
if none of key fields of all SAV entries of the data plane matches the index of the input interface for receiving the packet and the source address of the packet, and a SAV flag comprised in a result field of the target forwarding entry indicates that an address prefix comprised in the target forwarding entry is a legal source address prefix of an input interface, discarding the packet;
if none of key fields of all SAV entries of the data plane matches the index of the input interface for receiving the packet and the source address of the packet, and the SAV flag comprised in the result field of the target forwarding entry does not indicate that the address prefix comprised in the target forwarding entry is a legal source address prefix of an input interface, permitting the packet.

6. The method according to claim 4, wherein matching the source address of the packet with a key field of a forwarding entry to obtain a target forwarding entry with a key field matching the source address of the packet comprises:
matching the source address of the packet with address prefixes comprised in the key fields of the forwarding entries to obtain at least one candidate entry with an address prefix matching the source address of the packet;
determining a candidate entry to which a longest address prefix belongs from the at least one candidate entry as the target forwarding entry with a key field matching the source address of the packet.

7. The method according to any one of claims 4-6, wherein each forwarding chip of the at least one forwarding chip stores a forwarding entry learned by the network device; and/or
the forwarding entry is stored in a ternary content addressable memory, TCAM.

8. The method according to any one of claims 4-6, wherein a bit width of the SAV flag is 1 bit.

9. A packet processing method carried out by a network device, wherein the network device comprises a forwarding chip, said method comprising all the steps of claim 1, and further comprising:
learning (S91) a SAV entry of a control plane, wherein a key field of the SAV entry of the control plane comprises an index of an input interface, and a value field of the SAV entry of the control plane comprises at least one legal source address prefix;
constructing (S92) the SAV entry of the data plane according to the SAV entry of the control plane.

10. A forwarding chip, wherein the forwarding chip is configured to execute the
method according to any one of claims 1-8.

11. A network device, wherein the network device comprises at least one forwarding chip according to claim 10.

12. The network device according to claim 11, wherein the network device further comprises a processor; wherein the processor is to learn a SAV entry of a control plane, a key field of the SAV entry of the control plane comprises an index of an input interface, and a value field of the SAV entry of the control plane comprises at least one legal source address prefix; and construct a SAV entry of a data plane according to the SAV entry of the control plane.

## Patentansprüche

1. Verfahren zur Paketverarbeitung, das von mindestens einem Weiterleitungs-Chip einer Netzwerkvorrichtung ausgeführt wird, wobei das Verfahren umfasst:
Abgleichen (S51, S71) eines Indexes einer Eingabeschnittstelle zum Empfangen eines Pakets und einer Quelladresse des Pakets mit einem Schlüsselfeld eines SAV (Source Address Validation) - Eintrags einer Datenebene, wobei das Schlüsselfeld des SAV-Eintrags der Datenebene einen Index einer Eingabeschnittstelle und ein zulässiges Quelladresspräfix umfasst;
wenn ein Schlüsselfeld eines Ziel-SAV-Eintrags mit dem Index der Eingabeschnittstelle zum Empfangen des Pakets und der Quelladresse des Pakets übereinstimmt, das Paket zulassen (S52, S72),
wobei jeder Weiterleitungs-Chip des mindestens einen Weiterleitungs-Chips einen SAV-Eintrag der Datenebene speichert, dessen Schlüsselfeld einen Index einer Schnittstelle auf dem Weiterleitungs-Chip umfasst.

2. Verfahren nach Anspruch 1, wobei der SAV-Eintrag der Datenebene in einem ternären inhaltsadressierbaren Speicher (TCAM) gespeichert ist.

3. Verfahren nach Anspruch 1 oder 2, wobei ein Ergebnisfeld des SAV-Eintrags der Datenebene leer ist;
der Index der Eingabeschnittstelle und das zulässige Quelladresspräfix in das Schlüsselfeld des SAV-Eintrags der Datenebene in der Reihenfolge des Indexes der Eingabeschnittstelle und anschließend des zulässigen Quelladresspräfixes eingetragen werden; oder das zulässige Quelladresspräfix und der Index der Eingabeschnittstelle in das Schlüsselfeld des SAV-Eintrags in der Reihenfolge des zulässigen Quelladresspräfixes und anschließend des Indexes der Eingabeschnittstelle eingetragen werden.

4. Verfahren nach Anspruch 1, wobei das Verfahren ferner umfasst:
Abgleichen (S73) der Quelladresse des Pakets mit einem Schlüsselfeld eines Weiterleitungseintrags, um einen Zielweiterleitungseintrag mit einem Schlüsselfeld zu erhalten, das mit der Quelladresse des Pakets übereinstimmt, wobei das Schlüsselfeld des Weiterleitungseintrags ein Adresspräfix umfasst und ein Ergebnisfeld des Weiterleitungseintrags ein SAV-Flag umfasst;
wenn keines der Schlüsselfelder aller SAV-Einträge der Datenebene mit dem Index der Eingabeschnittstelle für den Empfang des Pakets und der Quelladresse des Pakets übereinstimmt und ein SAV-Flag, das in einem Ergebnisfeld des Zielweiterleitungseintrags enthalten ist, anzeigt, dass ein in dem Zielweiterleitungseintrag enthaltenes Adresspräfix ein zulässiges Quelladresspräfix einer Eingabeschnittstelle ist, das Paket verwerfen (S74);
wenn keines der Schlüsselfelder aller SAV-Einträge der Datenebene mit dem Index der Eingabeschnittstelle zum Empfang des Pakets und der Quelladresse des Pakets übereinstimmt und das im Ergebnisfeld des Zielweiterleitungseintrags enthaltene SAV-Flag nicht anzeigt, dass das im Zielweiterleitungseintrag enthaltene Adresspräfix ein zulässiges Quelladresspräfix einer Eingabeschnittstelle ist, wird das Paket zugelassen (S75).

5. Verfahren nach Anspruch 1, wobei das Verfahren ferner umfasst:
Bestimmen eines Einsatzmodus der Quelladressvalidierung in domäneninternen und domänenübergreifenden Netzwerken, SAVNET, für ein Netzwerk, zu dem das Netzwerkgerät gehört;
wenn ein ermittelter Einsatzmodus ein vollständiger Modus ist und keines der Schlüsselfelder aller SAV-Einträge der Datenebene mit dem Index der Eingabeschnittstelle zum Empfang des Pakets und der Quelladresse des Pakets übereinstimmt, Verwerfen des Pakets;
wenn der ermittelte Einsatzmodus ein unvollständiger Modus ist, Abgleichen der Quelladresse des Pakets mit einem Schlüsselfeld eines Weiterleitungseintrags, um einen Zielweiterleitungseintrag mit einem Schlüsselfeld zu erhalten, das mit der Quelladresse des Pakets übereinstimmt, wobei das Schlüsselfeld des Weiterleitungseintrags ein Adresspräfix umfasst und ein Ergebnisfeld des Weiterleitungseintrags ein SAV-Flag umfasst;
wenn keines der Schlüsselfelder aller SAV-Einträge der Datenebene mit dem Index der Eingabeschnittstelle zum Empfang des Pakets und der Quelladresse des Pakets übereinstimmt und ein in einem Ergebnisfeld des Zielweiterleitungseintrags enthaltenes SAV-Flag anzeigt, dass ein in dem Zielweiterleitungseintrag enthaltenes Adresspräfix ein zulässiges Quelladresspräfix einer Eingabeschnittstelle ist, Verwerfen des Pakets;
wenn keines der Schlüsselfelder aller SAV-Einträge der Datenebene mit dem Index der Eingabeschnittstelle für den Empfang des Pakets und der Quelladresse des Pakets übereinstimmt und das im Ergebnisfeld des Zielweiterleitungs-Eintrags enthaltene SAV-Flag nicht anzeigt, dass das im Zielweiterleitungs-Eintrag enthaltene Adresspräfix ein zulässiges Quelladresspräfix einer Eingabeschnittstelle ist, Durchzulassen des Pakets.

6. Verfahren nach Anspruch 4, wobei das Abgleichen der Quelladresse des Pakets mit einem Schlüsselfeld eines Weiterleitungseintrags, um einen ZielWeiterleitungseintrag mit einem Schlüsselfeld zu erhalten, das mit der Quelladresse des Pakets übereinstimmt, umfasst:
Abgleichen der Quelladresse des Pakets mit Adresspräfixen, die in den Schlüsselfeldern der Weiterleitungseinträge enthalten sind, um mindestens einen Kandidateneintrag mit einem Adresspräfix zu erhalten, das mit der Quelladresse des Pakets übereinstimmt;
Bestimmen eines Kandidateneintrags, zu dem ein längstes Adresspräfix gehört, aus dem mindestens einen Kandidateneintrag als Zielweiterleitungseintrag mit einem Schlüsselfeld, das mit der Quelladresse des Pakets übereinstimmt.

7. Verfahren nach einem der Ansprüche 4 bis 6, wobei die Netzwerkvorrichtung mindestens einen Weiterleitungs-Chip umfasst; jeder Weiterleitungs-Chip einen von der Netzwerkvorrichtung erlernten Weiterleitungseintrag speichert; und/oder
der Weiterleitungseintrag in einem ternären inhaltsadressierbaren Speicher (TCAM) gespeichert ist.

8. Verfahren nach einem der Ansprüche 4 bis 6, wobei die Bitbreite des SAV-Flags 1 Bit beträgt.

9. Verfahren nach Anspruch 1, wobei das Verfahren ferner umfasst:
Erlernen (S91) eines SAV-Eintrags einer Steuerungsebene, wobei ein Schlüsselfeld des SAV-Eintrags der Steuerungsebene einen Index einer Eingabeschnittstelle umfasst und ein Wertfeld des SAV-Eintrags der Steuerungsebene mindestens ein zulässiges Quelladresspräfix umfasst;
Erstellen (S92) des SAV-Eintrags der Datenebene gemäß dem SAV-Eintrag der Steuerungsebene.

10. Ein Weiterleitungs-Chip, wobei der Weiterleitungs-Chip eingerichtet ist, Schritte des Verfahrens gemäß einem der Ansprüche 1 bis 8 auszuführen.

11. Netzwerkvorrichtung, wobei die Netzwerkvorrichtung mindestens einen Weiterleitungs-Chip gemäß Anspruch 10 umfasst.

12. Netzwerkvorrichtung nach Anspruch 11, wobei die Netzwerkvorrichtung ferner einen Prozessor umfasst; wobei der Prozessor eingerichtet ist, einen SAV-Eintrag einer Steuerungsebene zu erlernen, wobei ein Schlüsselfeld des SAV-Eintrags der Steuerungsebene einen Index einer Eingabeschnittstelle umfasst und ein Wertefeld des SAV-Eintrags der Steuerungsebene mindestens ein zulässiges Quelladresspräfix umfasst; und einen SAV-Eintrag einer Datenebene entsprechend dem SAV-Eintrag der Steuerungsebene zu erstellen.

## Revendications

1. Procédé de traitement de paquets, qui est mis en œuvre par une puce de transfert d'un dispositif réseau, comprenant :
la mise en concordance (S51, S71) d'un indice d'une interface d'entrée pour la réception d'un paquet et d'une adresse source du paquet avec un champ clé d'une entrée de validation d'adresse source, SAV, d'un plan de données, dans lequel le champ clé de l'entrée SAV du plan de données comprend un indice d'une interface d'entrée et un préfixe d'adresse source légale ;
si un champ clé d'une entrée SAV cible concorde avec l'indice de l'interface d'entrée pour la réception du paquet et de l'adresse source du paquet, l'autorisation (S52, S72) du paquet,
dans lequel le dispositif réseau comprend au moins une puce de transfert ; chaque puce de transfert stocke une entrée SAV du plan de données dont le champ clé comprend un indice d'une interface sur la puce de transfert.

2. Procédé selon la revendication 1, dans lequel l'entrée SAV du plan de données est stockée dans une mémoire adressable de contenu ternaire, TCAM.

3. Procédé selon la revendication 1 ou 2, dans lequel un champ de résultat de l'entrée SAV du plan de données est vide ;
l'indice de l'interface d'entrée et le préfixe d'adresse source légale sont renseignés dans le champ clé de l'entrée SAV du plan de données dans un ordre de l'indice de l'interface d'entrée puis du préfixe d'adresse source légale ; ou le préfixe d'adresse source légale et l'indice de l'interface d'entrée sont renseignés dans le champ clé de l'entrée SAV dans un ordre du préfixe d'adresse source légale puis de l'indice de l'interface d'entrée.

4. Procédé selon la revendication 1, dans lequel le procédé comprend en outre :
la mise en concordance (S73) de l'adresse source du paquet avec un champ clé d'une entrée de transfert pour obtenir une entrée de transfert cible ayant un champ clé concordant avec l'adresse source du paquet, dans lequel le champ clé de l'entrée de transfert comprend un préfixe d'adresse, et un champ de résultat de l'entrée de transfert comprend un drapeau SAV ;
si aucun des champs clés de toutes les entrées SAV du plan de données ne concorde avec l'indice de l'interface d'entrée pour la réception du paquet et de l'adresse source du paquet, et qu'un drapeau de SAV compris dans un champ de résultat de l'entrée de transfert cible indique qu'un préfixe d'adresse compris dans l'entrée de transfert cible est un préfixe d'adresse source légale d'une interface d'entrée, le rejet (S74) du paquet ;
si aucun des champs clés de toutes les entrées SAV du plan de données ne concorde avec l'indice de l'interface d'entrée pour la réception du paquet et de l'adresse source du paquet, et que le drapeau SAV compris dans le champ de résultat de l'entrée de transfert cible n'indique pas que le préfixe d'adresse compris dans l'entrée de transfert cible est un préfixe d'adresse source légale d'une interface d'entrée, l'autorisation (S75) du paquet.

5. Procédé selon la revendication 1, dans lequel le procédé comprend en outre :
la détermination d'un mode de déploiement de validation d'adresse source dans des réseaux intradomaines et interdomaines, SAVNET, pour un réseau auquel le dispositif réseau appartient ;
si un mode de déploiement déterminé est un mode complet et qu'aucun des champs clés de toutes les entrées SAV du plan de données ne concorde avec l'indice de l'interface d'entrée pour la réception du paquet et de l'adresse source du paquet, le rejet du paquet ;
si le mode de déploiement déterminé est un mode incomplet, la mise en concordance de l'adresse source du paquet avec un champ clé d'une entrée de transfert pour obtenir une entrée de transfert cible ayant un champ clé concordant avec l'adresse source du paquet, dans lequel le champ clé de l'entrée de transfert comprend un préfixe d'adresse, et un champ de résultat de l'entrée de transfert comprend un drapeau SAV ;
si aucun des champs clés de toutes les entrées SAV du plan de données ne concorde avec l'indice de l'interface d'entrée pour la réception du paquet et de l'adresse source du paquet, et qu'un drapeau SAV compris dans un champ de résultat de l'entrée de transfert cible indique qu'un préfixe d'adresse compris dans l'entrée de transfert cible est un préfixe d'adresse source légale d'une interface d'entrée, le rejet du paquet ;
si aucun des champs clés de toutes les entrées SAV du plan de données ne concorde avec l'indice de l'interface d'entrée pour la réception du paquet et de l'adresse source du paquet, et que le drapeau SAV compris dans le champ de résultat de l'entrée de transfert cible n'indique pas que le préfixe d'adresse compris dans l'entrée de transfert cible est un préfixe d'adresse source légale d'une interface d'entrée, l'autorisation du paquet.

6. Procédé selon la revendication 4, dans lequel la mise en concordance de l'adresse source du paquet avec un champ clé d'une entrée de transfert pour obtenir une entrée de transfert cible ayant un champ clé concordant avec l'adresse source du paquet comprend :
la mise en concordance de l'adresse source du paquet avec des préfixes d'adresse compris dans les champs clés des entrées de transfert pour obtenir au moins une entrée candidate ayant un préfixe d'adresse concordant avec l'adresse source du paquet ;
la détermination d'une entrée candidate à laquelle un préfixe d'adresse le plus long appartient à partir de l'au moins une entrée candidate comme étant l'entrée de transfert cible ayant un champ clé concordant avec l'adresse source du paquet.

7. Procédé selon l'une des revendications 4 à 6, dans lequel chaque puce de transfert de l'au moins une puce de transfert stocke une entrée de transfert apprise par le dispositif réseau ; et/ou
l'entrée de transfert est stockée dans une mémoire adressable de contenu ternaire, TCAM.

8. Procédé selon l'une des revendications 4 à 6, dans lequel une largeur de bit du drapeau SAV est de 1 bit.

9. Procédé de traitement de paquets effectué par un dispositif réseau, dans lequel le dispositif réseau comprend une puce de transfert, ledit procédé comprenant toutes les étapes de la revendication 1, et comprenant en outre :
l'apprentissage (S91) d'une entrée SAV d'un plan de commande, dans lequel un champ clé de l'entrée SAV du plan de commande comprend un indice d'une interface d'entrée, et un champ de valeur de l'entrée SAV du plan de commande comprend au moins un préfixe d'adresse source légale ;
la construction (S92) de l'entrée SAV du plan de données selon l'entrée SAV du plan de commande.

10. Puce de transfert, dans laquelle la puce de transfert est configurée pour exécuter le procédé selon l'une des revendications 1 à 8.

11. Dispositif réseau, dans lequel le dispositif réseau comprend au moins une puce de transfert selon la revendication 10.

12. Dispositif réseau selon la revendication 11, dans lequel le dispositif réseau comprend en outre un processeur ; dans lequel le processeur doit apprendre une entrée SAV d'un plan de commande, un champ clé de l'entrée SAV du plan de commande comprend un indice d'une interface d'entrée, et un champ de valeur de l'entrée SAV du plan de commande comprend au moins un préfixe d'adresse source légale ; et construire une entrée SAV d'un plan de données selon l'entrée SAV du plan de commande.
